# EUROPÄISCHE PATENTSCHRIFT

(11) **EP 3 667 115 B1**
(45) Veröffentlichungstag und Bekanntmachung des Hinweises auf die Patenterteilung: **09.03.2022**
(21) Anmeldenummer: 19213652.1
(22) Anmeldetag: 04.12.2019
(51) Int. Cl.: F16D 65/12

(54) **BREMSSCHEIBE FÜR EINE FAHRZEUG-SCHEIBENBREMSE**
BRAKE DISC FOR A VEHICLE DISC BRAKE
DISQUE DE FREIN POUR UN FREIN À DISQUE DE VÉHICULE

(30) Priorität: 12.12.2018 DE 102018221573
(43) Veröffentlichungstag der Anmeldung: 17.06.2020
(73) Patentinhaber: Continental Teves AG & Co. OHG, 60488 Frankfurt am Main (DE)
(72) Erfinder: Hollstein, Frank, 60488 Frankfurt am Main (DE); Weller, Ralph, 60488 Frankfurt am Main (DE)
(74) Vertreter: Continental Corporation

(56) Entgegenhaltungen:
- EP-A1- 1 918 605
- DE-A1- 19 539 615
- DE-C1- 4 445 236
- FR-A1- 2 264 285

## Beschreibung

Die Erfindung betrifft eine Bremsscheibe für eine Fahrzeug-Scheibenbremse, insbesondere für ein leichtes Nutzfahrzeug, mit wenigstens einem daran angeordneten Mittel zur Erfassung von Drehgeschwindigkeit, insbesondere zur Verwendung in einem Personenkraftfahrzeug oder einem leichten Nutzfahrzeug.

Eine Bremsscheibe ist funktional in einen Reibring und ein verdrehfest an den Reibring gekoppeltes Befestigungsteil aufgeteilt. Der Reibring kooperiert mit Bremsbelegen zur Erzeugung von Bremsmoment und Umwandlung der Bewegungsenergie in Wärme. Der Reibring kann je nach Ausführungsart entweder einteilig mit dem Befestigungsteil aus dem gleichen Werkstoff erzeugt oder, bei sogenannten gebauten beziehungsweise Verbundbremsscheiben, mit einem geeigneten Fügeverfahren mit diesem gesondert verbunden. Das Befestigungsteil dient zur verdrehfesten Kopplung des Reibrings an das Rad, die Radnabe oder beide gleichzeitig und weist zu diesem Zweck üblicherweise Gewinde- oder Durchgangsbohrungen für entsprechende Befestigungsschrauben oder Bolzen auf. Je nach Ausführungsart und Verwendungszweck kann das Befestigungsteil unterschiedlich gestaltet sein. So ist insbesondere im PKW Bereich eine Topfform üblich, wogegen bei Nutzfahrzeugen hauptsächlich verschiedene, mit entsprechenden Schnittstellen versehenen zylindrisch-rohrartigen Abschnitte Verwendung finden. Bei leichten Nutzfahrzeugen sind oft beide Typen und Mischformen im Einsatz.

Für diverse Assistenzsysteme im Fahrzeug ist es erforderlich, momentane Drehgeschwindigkeiten von einzelnen Rädern möglichst exakt zu kennen. Zur Ermittlung der Drehgeschwindigkeit wird üblicherweise ein Sensor auf Basis eines Hall-Elements eingesetzt. Dieser erfasst eine Abfolge von regelmäßig angeordneten metallischen oder magnetischen Störkörpern in der Nähe des Sensors. Als Störkörper dient meist eine alternierende Anordnung von Metallstegen und Durchbüchen, Zahnspitzen, Magneten, Dipolen und Dergleichen. Es ist bekannt derartige Mittel zur Erfassung von Drehgeschwindigkeit an der Bremsscheibe vorzusehen, wo sie an die Drehgeschwindigkeit des Rads unmittelbar gekoppelt, jedoch von einem oft stattfindenden Radwechsel nicht betroffen sind.

Eine an sich vielfach, beispielsweise aus EP 1918605 A1 bekannte Lösung, derartige Mittel an einem gesonderten, angebauten Geberelement vorzusehen, welches angeschraubt, verklebt oder verpresst wird, führt in Verbindung mit einer thermisch stark belasteten sowie den Umwelteinflüssen ausgesetzten Bremsscheibe zu mehreren Nachteilen. Bedingt durch unterschiedliche Wärmedehnungskoeffizienten, Temperaturschocks, Korrosion oder Steinschlag können die angebauten Geberelemente beispielsweise ihre Haftung oder Zentrierung verlieren, plastisch deformiert werden oder reißen. Zudem sind hierfür zusätzliche aufwändige Vormontage- und Prüfoperationen erforderlich.

Aus DE 149 57 632 A1 sind drei verschiedene in dieser Hinsicht verbesserte Lösungen bekannt, bei denen Mittel zur Erfassung der Drehgeschwindigkeit am Reibring integriert vorgesehen sind, so dass diese zumindest nicht deplatziert werden können.

Zum einen wird es vorgeschlagen, bei einem innenbelüfteten Reibring an seinem radialen Außenumfang die Außenflanken von Stegen zu erfassen, welche innerhalb des Reibrings die Belüftungskanäle begrenzen und definieren. Derartige Lösung stellt jedoch ein verbesserungswürdiges Kompromiss zwischen unterschiedlich gearteten Anforderungen in Bezug auf Sensierpräzision einerseits sowie Stabilität und ausreichenden Belüftung des Reibrings andererseits.

Zum anderem wird vorgeschlagen, am radialen Außenumfang des Reibrings eine trapezförmige Verzahnung auszubilden, deren Zähne vom Sensor erfasst werden. Eine derartige Lösung hat Nachteile in Bezug auf die Herstellbarkeit, erhöht die Verletzungsgefahr, und führt zu einer Verringerung der effektiv nutzbaren Reibfläche. Zudem kann das übliche Auswuchten der Bremsscheibe durch Materialabtragung am radialen Außenrand nur eingeschränkt oder gar nicht verwendet werden.

Des Weiteren wird es vorgeschlagen, dass der Sensor die axial gerichteten Belüftungsbohrungen in der Reibfläche erfassen soll. Durch den großen Abstand zwischen den Bohrungen und in Relation zum umgebenden Metallflächen sehr kleine Bohrungsquerschnitte sind Präzision, Auflösung und Stabilität der Messung stark eingeschränkt.

Ein wesentlicher Nachteil bei allen diesen Varianten wie auch bei einigen aus FR 2264285 A1 bekannten außenseitig am Bremstopf ausgebildeten Zahnkränzen ist, dass der Sensor im Bremssattel angeordnet und verkabelt werden muss und somit besonders starken thermischen und Umweltbelastungen sowie dem Bremsstaub ausgesetzt ist, so dass besonders aufwändige Vorkehrungen erforderlich sind, um die Funktion dauerhaft aufrecht zu erhalten.

Ein bekanntes Phänomen bei Bremsscheiben ist eine erwärmungsbedingte Verformung des Reibrings, sogenannte Schirmung der Bremsscheibe, was zu relativhohen Schwankungen des Abstands zwischen dem Sensor und den zugeordneten Mittel zur Erfassung der Drehgeschwindigkeit verursachen kann. Als Folge muss der Sensor aufwändiger und teurer konstruiert oder eine Verringerung der Sensiergenauigkeit akzeptiert werden.

Bei beispielsweise aus DE 4445236 C1 oder FR 2264285 A1 bekannten Lösungen mit axial in Fahrzeugrichtung ausgerichteten Zahnkränzen muss ein hoher Aufwand betrieben werden, um unter Berücksichtigung von Montagetoleranzen und betriebsbedingten Bauteilverzug den definierten Abstand zum Sensor zuverlässig einhalten zu können. Vor diesem Hintergrund liegt der vorliegenden Erfindung die Aufgabe zugrunde, eine verbesserte Lösung zur Ausbildung von Mittel zur Erfassung der Drehgeschwindigkeit der Bremsscheibe vorzuschlagen, welche von den vorstehend genannten Nachteilen möglichst befreit ist.

Die Aufgabe wird erfindungsgemäß durch eine Bremsscheibe mit der Merkmalskombination nach Anspruchs 1 gelöst. Unteransprüche zusammen mit Figuren und Beschreibung schlagen erfindungsgemäß weitere vorteilhafte Ausführungen und Weiterbildungen vor. Die Erfindung sieht daher vor, dass das Mittel zur Erfassung von Drehgeschwindigkeit einteilig mit dem Befestigungsteil ausgebildet und gemäß der vorteilhaften Weiterbildung radial innerhalb eines Bereiches zwischen einer Raddrehachse und einer radialen Innenkante der Reibfläche angeordnet ist.

Durch die integrierte Bauweise wird die Gefahr einer Deplatzierung, Verformung oder Ablösung ausgeschlossen. Eine Position radial unterhalb des Bremssattels ermöglicht eine drehachsennahe Anordnung des Sensors in einem thermisch und montagetechnisch günstigeren Raumabschnitt.

Die Herstellung der erfindungsgemäßen Bremsscheibe zusammen mit dem erfindungsgemäßen Mittel zur Erfassung von Drehgeschwindigkeit wird vereinfacht, wenn zumindest das Befestigungsteil gießtechnisch erzeugt ist.

Gemäß der Erfindung ist das Mittel zur Erfassung von Drehgeschwindigkeit als ein Zahnkranz, insbesondere als ein Außenkranz mit in radiale Richtung ausgerichteten, regelmäßig zueinander beabstandet ausgebildeten Zähnen und Zahnzwischenräumen gestaltet sein.

Dadurch wird die Herstellbarkeit des Zahnkranzes unabhängig von dem eingesetzten Verfahren vereinfacht. Die Entformbarkeit beim Abgießen wir begünstigt. Wenn der Zahnkranz gefräst werden soll, kann dies schnell mit kurzen Taktzeiten durch einfache Vorschubbewegungen in eine Raumrichtung sowie in einer Aufspannung erfolgen.

Für eine noch effektivere Raumausnutzung und vereinfachte Herstellbarkeit sowohl gießtechnisch als auch spanabhebend sieht die bevorzugten Ausführungsform der Erfindung ferner vor, dass an einer dem Fahrzeug zugewandten Seite des Befestigungsteils ein axial vorgestreckter umlaufender Kragen ausgebildet und der Zahnkranz an dem Kragen angeordnet ist.

Gemäß einer weiteren vorteilhaften Weiterbildung kann der Zahnkranz fahrzeugseitig durch eine plan ausgebildete Endfläche begrenzt sein, wodurch der axiale Abstand zu benachbarten Achskomponenten verringert werden kann und die Gefahr, durch einen "Mitnahmeeffekt" der Zahne Steine, Splitt oder sonstigen Schmutz in den Luftspalt einzubringen und damit beispielsweise den Sensor zu beeinflussen oder zu beschädigen wird reduziert.

Für eine besonders einfache spanabhebende Bearbeitung sieht eine Weiterbildung vor, dass die Mantelfläche des Zahnzwischenraums zumindest abschnittsweise einen konstanten Radius aufweist, insbesondere als eine axiale Protrusion eines Kreissegments, und besonders bevorzugt als ein Halbzylinder ausgebildet ist. Dadurch kann ein Zahnzwischenraum besonders effizient mit einem gewöhnlichen Schaftfräser durch eine einfache Vorschubbewegung erzeugt werden.

Im Folgenden wird die Erfindung anhand von zwei erfindungsgemäßen Ausführungsbeispielen näher erläutert. Hierbei zeigen:

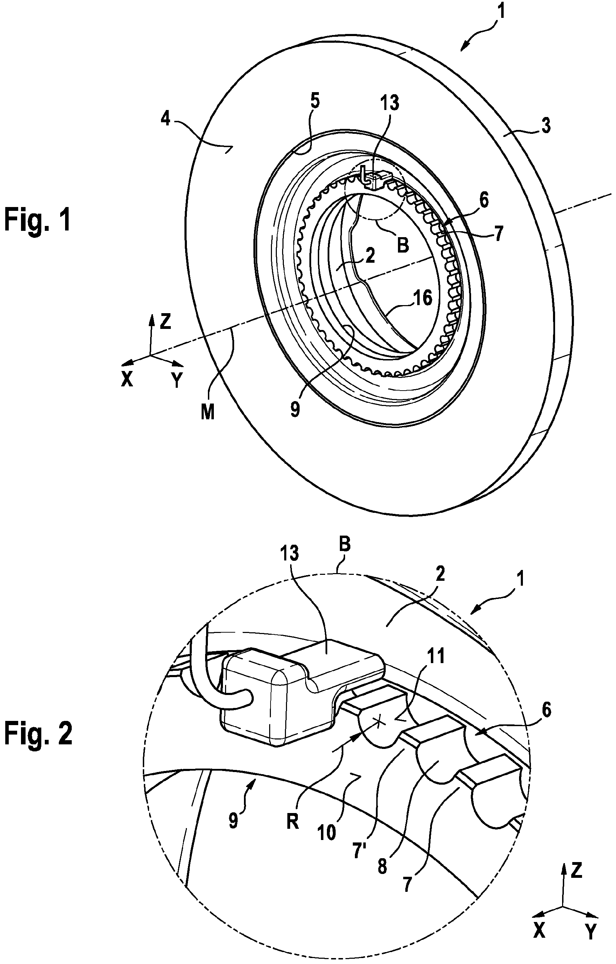

Fig.1 eine räumliche Ansicht einer bevorzugten Ausbildung des Mittels zur Erfassung der Drehgeschwindigkeit an einer Bremsscheibenausführung für leichte Nutzfahrzeuge.
Fig.2 eine vergrößerte Detailansicht mit einem erfindungsgemäßen integrierten Zahnkranz und einem zugeordneten Sensor gemäß Ausführungsform nach Fig.1.

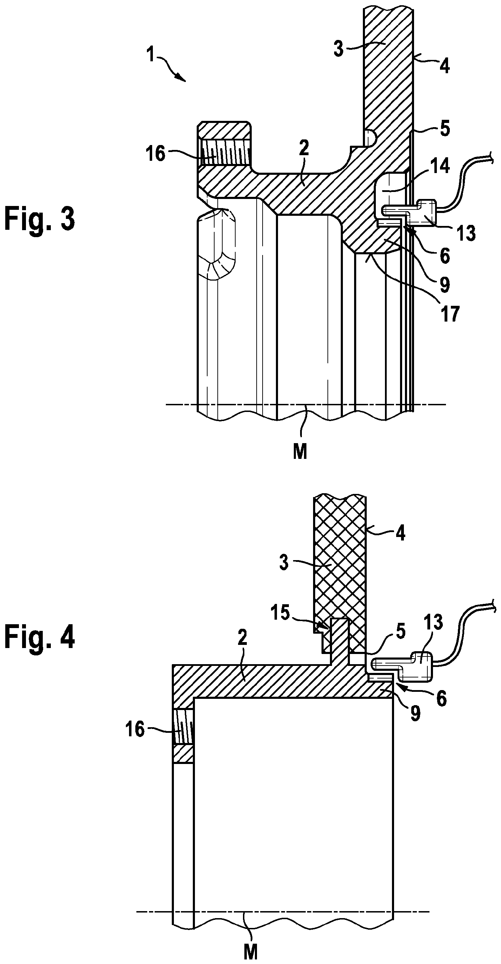

Fig.3 die Ausführungsform gemäß Fig.1 als Teilschnitt durch die Raddrehachse.
Fig.4 eine Ansicht gemäß Fig.3 mit einer anderen Ausführung der Bremsscheibe als eine Verbundbremsscheibe für PKW.

### Fig.1

Bei der bevorzugten, gegossenen Ausführungsform der Bremsscheibe 1 für leichte Nutzfahrzeuge ist das Befestigungsteil (2) einteilig mit dem Reibring (3) ausgebildet. Fahrzeugkomponenten wie Achskomponenten, Radnaben, Räder und Dergleichen sind nicht dargestellt.

Funktionsgemäß ist eine Bremsscheibe 1 in axiale beziehungsweise X-Richtung asymmetrisch ausgebildet und weist eine in Bezug auf ihre vorgesehene Verbaulage im Fahrzeug eine fahrzeugzugewandte und eine fahzeugabgewandte Seite auf. Die Schnittstelle respektive Bohrungen 16 am Befestigungsteil 2 zur Verbindung der Bremsscheibe 1 mit einer Radnabe und/oder einem Rad befinden sich auf der fahrzeugabgewandten Seite. Ein Sensor 13 ist auf der fahrzeugzugewandten Seite der Bremsscheibe 1 ortsfest an einer nicht gezeigten Achskomponente des Fahrzeugs befestigt vorgesehen.

Der Reibring 3 ist im dargestellten Ausführungsbeispiel als ein nicht belüftetes Vollring ausgebildet und weist auf seiner fahrzeugzugewandten Seite eine Reibfläche 4 auf, welche nach radial innen durch eine Innenkante 5 begrenzt ist.

In einem radialen Bereich zwischen der Innenkante 5 und der Raddrehachse M ist am Befestigungsteil 2 ein Zahnkranz 6 konzentrisch zu der Raddrehachse (M) ausgebildet, dessen regelmäßig in Umfangsrichtung angeordneten Zähne 7 zwecks Bestimmung von Drehgeschwindigkeit der vom Sensor 13 erfasst werden.

### Fig.2

Das Befestigungsteil 2 weist auf seiner fahrzeugzugewandten Seite einen axial vorgestreckter umlaufender Kragen 9 auf.

Der Zahnkranz 6 ist als Außenkranz mit in radiale Richtung ausgerichtet ausgebildeten Zähnen 7 dem Kragen 9 einteilig mit dem Befestigungsteil 2 ausgebildet. Fahrzeugseitig ist der Zahnkranz 6 durch eine ebene, plan ausgebildete Endfläche 10 begrenzt.

Die jeweils benachbarten Zähne 7,7' sind in Umfangsrichtung jeweils durch einen Zahnzwischenraum 8 voneinander abgegrenzt. Eine Mantelfläche 11 des Zahnzwischenraums 8 ist im gezeigten Ausführungsbeispiel im Wesentlichen als ein Halbzylinder mit ausgebildet und stellt geometrisch eine Art axiale ausgerichtete Protrusion eines Kreissegments mit einem Radus R dar.

Durch diese Ausgestaltung kann der Zahnkranz sowohl gießtechnisch, unmittelbar gleichzeitig mit dem Befestigungsteil 2 beziehungsweise Bremsscheibe 1 erzeugt als auch nach dem Abgießen des Befestigungsteils 2 durch spanabhebende Bearbeitung, insbesondere Fräsen, in den Gussrohling eingearbeitet werden.

### Fig.3

Die hier dargestellte Ausführungsform der Bremsscheibe 1 für leichte Nutzfahrzeuge einteilig als Gussteil ausgebildet. Das am Reibring 3 angeformte Befestigungsteil 2 ist im Wesentlichen zylindrisch- rohrförmig in die fahrzeugabgewandte Seite vorgestreckt und verfügt an seinem dem Reibring 3 abgewandten Ende über mehrere nach radial außen abgewinkelte Flansche mit gewindebehafteten Bohrungen 16 zur Befestigung der Bremsscheibe 1.

Der am Befestigungsteil 2 ausgebildete, mit dem Zahnkranz 6 versehene umlaufender Kragen 9 bildet auf der fahrzeugzugewandten Seite der Bremsscheibe 1 eine Art axialen Einstich 14 in welchen der Sensor 13 eintaucht und dadurch vor Steinschlag, Spritzwasser und Bremsstaub weitgehend geschützt wird. Der Zahnkranz 6 ist somit in der radial inneren Seitenflanke des Einstichs 14 ausgebildet. Innerhalb der Erfindung kann der Zahnkranz jedoch auch als Innenverzahnung an der radial äußeren Seitenflanke des Einstichs 14, gegenüber der gezeigten Position ausgebildet sein.

An seinem radialen Innenumfang ist am Kragen 9 eine Anlagefläche 7 zur achszentrierten Anlage an der Radnabe ausgebildet.

### Fig.4

Eine PKW-Verbundscheibe ausgebildete weitere Ausführungsform der Bremsscheibe 1 ist zweiteilig ausgebildet. Das topfförmige Befestigungsteil 2 ist an einer Verbindungsstelle 15 mit dem Reibring 3 zusammengefügt. Der Zahnkranz 6 ist weiter hin einteilig mit dem Befestigungsteil 2 ausgebildet und radial innerhalb einer durch die Innenkante 5 der Reibfläche 4 definierten Begrenzung angeordnet.

Die Art und Weise der Verbindung zwischen dem Reibring 3 und dem Befestigungsteil 2 ist für die Erfindung unerheblich. Vielmehr soll hierbei eine grundsätzliche Anwendbarkeit der Erfindung an unterschiedliche einteilige oder mehrteilige Bremsscheiben mit vollen oder innenbelüfteten Reibringen betont werden.

## Patentansprüche

1. Bremsscheibe (1) für eine Fahrzeug-Scheibenbremse umfassend wenigstens einen wenigstens eine Reibfläche (4) aufweisenden Reibring (3) zur Erzeugung eines Bremsmoments und ein einteilig mit dem Reibring (3) ausgebildetes oder mit dem Reibring (3) gefügtes Befestigungsteil (2), welches zu einer drehfesten Anbindung des Reibrings (3) auf der, im montierten Zustand, fahrzeugabgewandten Seite an eine Radnabe dient und mit wenigstens einem zur Erfassung einer Drehgeschwindigkeit der Bremsscheibe (1) eingerichteten, einteilig mit dem Befestigungsteil (2) ausgebildeten Zahnkranz (6) mit in Umfangsrichtung regelmäßig zueinander beabstandet ausgebildeten Zähnen (7) und Zahnzwischenräumen (8), **dadurch gekennzeichnet, dass** an einer dem Fahrzeug zugewandten Seite des Befestigungsteils (2) ein axial vorgestreckter umlaufender Kragen (9) ausgebildet ist und der Zahnkranz (6) an dem Kragen (9) als ein Außenkranz mit in radiale Richtung ausgerichtet ausgebildeten Zähnen (7) gestaltet ist.

2. Bremsscheibe (1) nach Anspruch 1 **dadurch gekennzeichnet, dass** der Zahnkranz (6) radial innerhalb eines Bereiches zwischen einer Raddrehachse (M) und einer radialen Innenkante (5) der Reibfläche (4) angeordnet ist.

3. Bremsscheibe (1) nach wenigstens einem der vorstehenden Ansprüche **dadurch gekennzeichnet, dass** zumindest das Befestigungsteil (2) gießtechnisch erzeugt ist

4. Bremsscheibe (1) nach wenigstens einem der vorstehenden Ansprüche **dadurch gekennzeichnet, dass** der Zahnkranz (6) fahrzeugseitig durch eine plan ausgebildete Endfläche (10) begrenzt ist.

5. Bremsscheibe (1) nach wenigstens einem der vorstehenden Ansprüche **dadurch gekennzeichnet, dass** eine Mantelfläche (11) des Zahnzwischenraums (8) zumindest abschnittsweise einen konstanten Radius (R) aufweist.

6. Bremsscheibe (1) nach Anspruch 5 **dadurch gekennzeichnet, dass** der Zahnzwischenraum (8) zumindest abschnittsweise als eine axiale Protrusion eines Kreissegments, insbesondere als ein Halbzylinder ausgebildet ist.

7. Bremsscheibe (1) nach wenigstens einem der vorstehenden Ansprüche **dadurch gekennzeichnet, dass** der Zahnkranz (6) gießtechnisch zusammen mit dem Befestigungsteil (2) erzeugt ist.

8. Bremsscheibe (1) nach wenigstens einem der vorstehenden Ansprüche **dadurch gekennzeichnet, dass** der Zahnkranz (6) durch spanabhebende Bearbeitung eines Gussrohlings erzeugt ist.

## Claims

1. Brake disc (1) for a vehicle disc brake, comprising at least one friction ring (3) which has at least one friction surface (4) and which serves for generating a braking torque, and a fastening part (2) which is formed integrally with the friction ring (3) or which is joined to the friction ring (3) and which serves for a rotationally conjoint connection of the friction ring (3), on the side which faces away from the vehicle in the installed state, to a wheel hub, and having at least one toothed ring (6) which is configured for the detection of a rotational speed of the brake disc (1) and which is formed integrally with the fastening part (2) and which has teeth (7) and tooth spaces (8) formed at regular intervals with respect to one another in a circumferential direction, **characterized in that,** on a side of the fastening part (2) which faces towards the vehicle, there is formed an axially projecting encircling collar (9), and the toothed ring (6) is formed on the collar (9) as an external ring with teeth (7) formed so as to be oriented in a radial direction.

2. Brake disc (1) according to Claim 1, **characterized in that** the toothed ring (6) is arranged radially within a region between a wheel axis of rotation (M) and a radial inner edge (5) of the friction surface (4).

3. Brake disc (1) according to at least one of the preceding claims, **characterized in that** at least the fastening part (2) is produced by casting.

4. Brake disc (1) according to at least one of the preceding claims, **characterized in that** the toothed ring (6) is delimited at the vehicle side by a planar end surface (10).

5. Brake disc (1) according to at least one of the preceding claims, **characterized in that** a lateral surface (11) of the tooth space (8) has a constant radius (R) at least in certain sections.

6. Brake disc (1) according to Claim 5, **characterized in that** the tooth space (8) is formed at least in certain sections as an axial protrusion of a circular segment, in particular as a semi-cylinder.

7. Brake disc (1) according to at least one of the preceding claims, **characterized in that** the toothed ring (6) is produced by casting together with the fastening part (2).

8. Brake disc (1) according to at least one of the preceding claims, **characterized in that** the toothed ring (6) is produced by cutting machining of a cast blank.

## Revendications

1. Disque de frein (1) pour un frein à disque de véhicule, comprenant au moins un anneau de friction (3) présentant au moins une surface de friction (4) et permettant de générer un couple de freinage, et une pièce de fixation (2) réalisée d'un seul tenant avec l'anneau de friction (3) ou assemblée avec l'anneau de friction (3) et qui sert à un raccordement verrouillé en rotation de l'anneau de friction (3) à un moyeu de roue sur le côté détourné du véhicule à l'état monté, et comprenant au moins une couronne dentée (6) aménagée pour détecter une vitesse de rotation du disque de frein (1), réalisée d'un seul tenant avec la pièce de fixation (2), et dotée de dents (7) et d'entredents (8) réalisés de manière régulièrement espacée les uns par rapport aux autres dans la direction périphérique,
**caractérisé en ce que** sur un côté de la pièce de fixation (2), tourné vers le véhicule, une collerette périphérique (9) faisant saillie axialement est réalisée, et la couronne dentée (6) est configurée sur la collerette (9) sous la forme d'une couronne extérieure dotée de dents (7) réalisées de manière orientée dans la direction radiale.

2. Disque de frein (1) selon la revendication 1, **caractérisé en ce que** la couronne dentée (6) est disposée radialement à l'intérieur d'une zone entre un axe de rotation de roue (M) et un bord intérieur radial (5) de la surface de friction (4).

3. Disque de frein (1) selon au moins l'une des revendications précédentes, **caractérisé en ce qu'**au moins la pièce de fixation (2) est fabriquée par une technique de coulée.

4. Disque de frein (1) selon au moins l'une des revendications précédentes, **caractérisé en ce que** la couronne dentée (6) est limitée côté véhicule par une surface d'extrémité (10) réalisée de manière plane.

5. Disque de frein (1) selon au moins l'une des revendications précédentes, **caractérisé en ce qu'**une surface latérale (11) de l'entredent (8) présente au moins par endroits un rayon constant (R).

6. Disque de frein (1) selon la revendication 5, **caractérisé en ce que** l'entredent (8) est réalisé au moins par endroits sous la forme d'une saillie axiale d'un segment de cercle, en particulier sous la forme d'un demi-cylindre.

7. Disque de frein (1) selon au moins l'une des revendications précédentes, **caractérisé en ce que** la couronne dentée (6) est produite par une technique de coulée conjointement avec la pièce de fixation (2).

8. Disque de frein (1) selon au moins l'une des revendications précédentes, **caractérisé en ce que** la couronne dentée (6) est produite par un usinage par enlèvement de copeaux d'une ébauche de coulée.
